# EUROPÄISCHE PATENTSCHRIFT

(11) **EP 0 452 516 B1**
(45) Veröffentlichungstag und Bekanntmachung des Hinweises auf die Patenterteilung: **27.09.1995**
(21) Anmeldenummer: 90105011.2
(22) Anmeldetag: 16.03.1990
(51) Int. Cl.: G01N 29/24

(54) **Ultraschall-Prüfkopf und Verfahren zu seinem Betrieb**
Ultrasonic measuring head and method of use thereof
Tête de mesure ultrasonore et méthode pour son utilisation

(43) Veröffentlichungstag der Anmeldung: 23.10.1991
(73) Patentinhaber: SIEMENS AKTIENGESELLSCHAFT, 80333 München (DE)
(72) Erfinder: Schmid, Rudi, Ing. grad., D-8551 Hemhofen (DE); Achtzehn, Hans-Jürgen, D-8551 Neuhaus (DE)

(56) Entgegenhaltungen:
- DE-A- 2 209 906
- DE-A- 2 636 107
- FR-A- 2 591 342
- US-A- 3 546 924
- US-A- 3 685 350

## Beschreibung

Die Erfindung bezieht sich auf einen Ultraschall-Prüfkopf zur Ultraschall-Prüfung von Schrauben nach dem Impuls-Echo-Verfahren und auf ein Verfahren zu seinem Betrieb.

Bei der Überwachung der Festigkeit und Zuverlässigkeit von Schraubverbindungen ist es in vielen Fällen erforderlich, eine zerstörungsfreie Werkstoffprüfung der Schrauben im eingebauten Zustand durchzuführen. Dies ist beispielsweise in kerntechnischen Anlagen der Fall, in denen regelmäßig Befestigungsschrauben sicherheitsrelevanter Anlagenteile untersucht werden müssen. Dies sind beispielsweise Kernumfassungsschrauben, mit denen im Reaktordruckbehälter eines Kernreaktors das Kerngerüst in der Kernumfassung befestigt ist. Diese Schrauben befinden sich unter Wasser und sind insbesondere durch Spannungsrißkorrosion gefährdet.

Zur Überprüfung dieser Schrauben werden in der Regel Ultraschall-Prüfverfahren eingesetzt, die nach dem Impuls-Echo-Verfahren arbeiten. Dazu wird ein Ultraschall-Prüfkopf mit einem Ultraschallwandler auf den Kopf einer Schraube aufgesetzt und ein A-Bild aufgenommen. Bekannte Prüfköpfe enthalten entweder einen einzigen Ultraschallwandler, der als Sender und Empfänger betrieben wird, oder zwei Ultraschallwandler, von denen einer nur als Sender und der andere nur als Empfänger vorgesehen ist. Diese bekannten Prüfköpfe sind nur für eine einzige Prüfaufgabe, beispielsweise das Erfassen von Fehlern in Form von quer zur Schraubenachse und im Bereich des Schraubenschaftes verlaufenden Rißflächen, konzipiert. Fehler in anderen Bereichen der Schraube oder Fehler mit anderer Orientierung relativ zur Schraubenachse können mit einem solchen Prüfkopf dann nur unzureichend erfaßt werden. Um alle Fehler sicher nachweisen zu können, ist daher der Einsatz mehrerer unterschiedlicher Prüfköpfe erforderlich. Der zeitliche Aufwand und die damit für das Personal in kerntechnischen Anlagen verbundene Strahlenbelastung ist dann entsprechend hoch.

Der Erfindung liegt nun die Aufgabenstellung zugrunde, einen Ultraschall-Prüfkopf anzugeben, bei dem diese Nachteile weitgehend vermieden sind. Außerdem soll ein Betriebsverfahren für einen Ultraschall-Prüfkopf gemäß der Erfindung angegeben werden, das eine möglichst genaue Analyse des Ortes und der Struktur des Fehlers in der Schraube ermöglicht.

Die genannten Aufgaben werden erfindungsgemäß gelöst mit den Merkmalen der Ansprüche 1 bzw. 13. Da im Ultraschall-Prüfkopf eine Ultraschallwandleranordnung mit mehreren Ultraschallwandlern vorgesehen ist, die sowohl als Sender als auch als Empfänger betreibbar sind, können unterschiedliche Prüfaufgaben erfüllt werden, ohne daß der Ultraschall-Prüfkopf gewechselt werden muß. Bei einem erfindungsgemäßen Ultraschall-Prüfkopf mit zwei Ultraschallwandlern, ergeben sich dann eine Vielzahl von Betriebsarten, von denen je nach Symmetrie des Aufbaues mehrere akustisch, d.h. hinsichtlich der aus dem Echobild ableitbaren Meßaussagen, äquivalent sein können. Akustisch äquivalent sind beispielsweise die beiden Betriebsarten, bei denen jeweils ein Ultraschallwandler als Sender und der andere als Empfänger betrieben werden. Zwei weitere Betriebsarten ergeben sich, wenn jeweils einer der Ultraschallwandler sowohl als Sender als auch als Empfänger aktiv ist, während der andere Ultraschallwandler nicht aktiviert ist. Darüber hinaus sind weitere Betriebsarten denkbar, die sich aus den Regeln der Kombinatorik ergeben, wenn vier Betriebszustände (Sender, Empfänger, Sender-und Empfänger, nicht aktiviert) auf zwei Ultraschallwandler verteilt werden. Für einen Ultraschall-Prüfkopf mit zwei Ultraschallwandlern ergeben sich dann drei meßtechnisch bevorzugte Betriebsarten, die sich hinsichtlich der mit ihnen durchführbaren Prüfaufgaben deutlich unterscheiden.

Als Stand der Technik wird das Dokument FR-A-2591342 genannt, das einen Ultraschallprüfkopf gemäß dem Oberbegriff des Anspruches 1 offenbart. Ferner ist aus dem Dokument DE-A-2636107 bekannt, mehrere Ultraschallwandler bei den im kennzeichnenden Teil des Anspruches 1 angegebenen Betriebsarten zu betreiben.

So eignet sich die erstgenannte Betriebsart, bei denen ein Ultraschallwandler als Sender und der andere als Empfänger betrieben werden, hauptsächlich zum Nachweis von Fehlern im Schraubenschaft und in der Nähe des Schraubenbodens, während die anderen beiden Betriebsarten, bei denen jeweils nur ein Ultraschallwandler aktiviert ist, hauptsächlich für Fehler im Übergangsbereich Schraubenkopf-Schraubenschaft geeignet sind.

In einer bevorzugten Ausführungsform sind die Ultraschallwandler voneinander jeweils durch eine akustische Trennschicht zum Unterdrücken eines direkten Übersprechens getrennt.

Der Ultraschall-Prüfkopf enthält für die Ultraschallwandler jeweils einen Koppelkörper aus einem festen Material, vorzugsweise aus Kunststoff, insbesondere aus Polymethylmetacrylat PMMA, der an seiner freien, vom Ultraschallwandler abgewandten Koppelfläche an die Oberflächengestalt des Schraubenkopfes angepaßt ist.

Die Ultraschallwandler sind in einem Gehäuse mit einer Symmetrieachse angeordnet, das im Bereich seiner Öffnung mit Mitteln zum Zentrieren des Ultraschall-Prüfkopfes auf dem Schraubenkopf versehen ist. Bei einem Ultraschall-Prüfkopf zur Prüfung von Schlitzschrauben ist ein Gehäuse vorgesehen, das auf den Schraubenkopf aufgesteckt werden kann und im Bereich seiner Öffnung Führungsmittel enthält, die ein Aufstecken nur in vorgegebenen Stellungen relativ zum Schlitz ermöglichen. Insbesondere für Schlitzschrauben, die mit einem in den Schlitz eingelegten Sicherungsstift gesichert sind, ist das Gehäuse des Ultraschall-Prüfkopfes im Bereich der Öffnung mit einander gegenüberliegenden Aussparungen versehen. Die Ultraschallwandler sind vorzugsweise spiegelsymmetrisch zu einer die Symmetrieachse enthaltenden Symmetrieebene angeordnet, wobei diese Symmetrieachse durch die Führungsmittel derart festgelegt ist, daß sie nach Aufstecken auf den Kopf wenigstens annähernd mit der Mittelebene des Schlitzes zusammenfällt.

In einer weiteren vorteilhaften Ausgestaltung des erfindungsgemäßen Ultraschall-Prüfkopfes sind in den sich jeweils von einer Aussparung zur gegenüberliegenden Aussparung erstreckenden Symmetrieebene akustische Trennschichten vorgesehen, deren Breite im wesentlichen der Breite des Schlitzes entspricht.

Die Ultraschallwandler sind vorzugsweise in einem Dämpfungskörper eingebettet. Zur Erhöhung der in den Prüfling eingeschallten Intensität sind die Ultrschallwandler mit einer Anpassungsschicht versehen, deren akustische Impedanz dem geometrischen Mittel der akustischen Impedanz des Koppelkörpers und der akustischen Impedanz des Ultraschallwandlers entspricht. Diese Anpassungsschicht ist vorzugsweise λ/4-dick.

In einer besonders bevorzugten Ausführungsform des Ultraschall-Prüfkopfes sind vier Ultraschallwandler vorgesehen, die vorzugsweise spiegelsymmetrisch zu den von den Trennschichten gebildeten Ebenen angeordnet sind. Mit einem solchen Prüfkopf lassen sich bei vertretbarem Prüfaufwand die in einer Schraube auftretenden Fehler sicher lokalisieren und charakterisieren.

Zur Lokalisierung und Charakterisierung eines Materialfehlers in der Schraube sind bei einem erfindungsgemäßen Ultraschall-Prüfkopf mehrere Meßschritte vorgesehen, in denen jeweils unterschiedliche Ultraschallwander im Sende- und/oder Empfangsmodus betrieben werden. Je nach Betriebsart des Ultraschall-Püfkopfes können unterschiedliche Prüfschwerpunkte gesetzt werden. Diese Prüfschwerpunkte beziehen sich auf unterschiedliche Fehlertypen und Fehlerorte. Bei Fehlern im Schraubenkopf ist es vorteilhaft, von den Wandlern des Ultraschall-Prüfkopfes jeweils nur einen als Sender und Empfänger zu betreiben. Um Fehler im Übergangsbereich zwischen Schraubenkopf und Schraubenschaft charakterisieren zu können sind Betriebsmoden geeignet, bei denen ein Ultraschallwandler als Sender und ein weiterer Ultraschallwandler als Empfänger betrieben werden. Zum Nachweis von Fehlern im Gewindeteil oder in der Nähe des Schraubenbodens ist insbesondere eine Betriebsart günstig, in der jeweils zwei Ultraschallwandler als Sender und die anderen beiden Ultraschallwandler als Empfänger betrieben werden.

Zur weiteren Erläuterung der Erfindung wird auf die Ausführungsbeispiele der Zeichnung verwiesen, in deren

FIG 1 ein Ultraschall-Prüfkopf gemäß der Erfindung zusammen mit einer zu prüfenden Schraube in einem Längsschnitt schematisch dargestellt ist.

FIG 2 und FIG 3 zeigen jeweils einen Ultraschall-Prüfkopf in einem Querschnitt.

FIG 4 zeigt einen Ultraschall-Prüfkopf in einem Längsschnitt, dessen Koppelfläche an die Oberfläche einer zu prüfenden Kugelbodenschraube angepaßt ist. In

FIG 5 ist dieser Ultraschall-Prüfkopf in einem Querschnitt veranschaulicht. In

FIG 6 bis FIG 10 sind unterschiedliche Fehlertypen in einer Schlitzschraube und dazu besonders angepaßte Betriebsverfahren eines bevorzugten Ultraschall-Prüfkopfes gemäß der Erfindung zusammen mit den zugehörigen Echogrammen dargestellt.

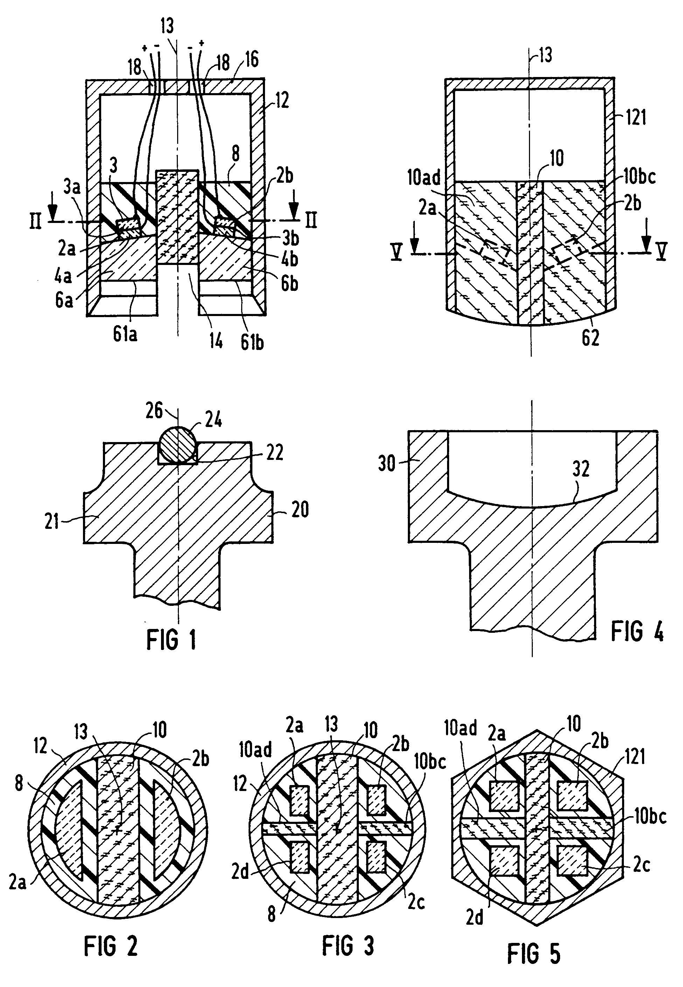

Gemäß FIG 1 enthält ein Ultraschall-Prüfkopf wenigstens zwei Ultraschallwandler 2a und 2b. Die Ultraschallwandler bestehen aus einem piezoelektrischen Material, beispielsweise einem Piezoquarz, vorzugsweise einer Piezokeramik. Die Ultraschallwandler 2a und 2b sind mit in der Figur nicht näher dargestellten Elektroden versehen, an die elektrische Zuführungen kontaktiert sind. An ihrer Abstrahlfläche 3a bzw. 3b sind die Ultraschallwandler 2a und 2b jeweils mit einer Anpassungsschicht 4a bzw. 4b versehen. Die akustische Impedanz dieser Anpassungsschichten 4a und 4b entspricht dabei vorzugsweise in etwa dem geometrischen Mittelwert der akustischen Impedanz des piezoelektrischen Schwingermaterials und der akustischen Impedanz von Koppelkörpern 6a und 6b. Die Anpassungsschichten sind vorzugsweise etwa λ/4-dick. Die Koppelkörper 6a und 6b bestehen aus einem festen Medium, vorzugsweise Kunststoff, insbesondere Polymethylmetacrylat PMMA. Für Koppelkörper 6a und 6b aus PMMA und Ultraschallwandler 2a bzw. 2b mit einem piezokeramischen Schwingermaterial ist als Anpassungsschicht 4a, 4b ein glasartiges Material besonders geeignet.

Die Koppelkörper 6a und b sind voneinander durch eine Trennschicht 10 aus einem schallundurchlässigen Material, beispielsweis Kork, voneinander getrennt. Durch diese Trennschicht 10 wird ein direktes akustisches Übersprechen zwischen den beiden Ultraschallwandlern 2a und 2b unterdrückt.

Die Koppelkörper 6a und b sind an ihrer den Ultraschallwandlern 2a und 2b jeweils abgewandten und als Koppelfläche 61a bzw. 61b dienenden Oberflächen an die Oberflächengestalt des Schraubenkopfes einer zu prüfenden Schraube, im Beispiel der Figur eine Schlitzschraube 20 mit einer ebenen Oberfläche, angepaßt.

Die Ultraschallwandler 2a und 2b sind in einem Dämpfungskörper 8 eingebettet. Der Dämpfungskörper 8 besteht vorzugsweise aus einer Mischung von Epoxidharz, Titanoxid TiO₂ und Gummimehl.

Der Ultraschall-Prüfkopf hat in der bevorzugten Ausführungsform gemäß der Figur ein zylindrisches Gehäuse 12, dessen eine Stirnfläche mit einem Deckel 16 verschlossen ist, der Bohrungen 18 für die elektrischen Zuführungen für die Ultraschallwandlern 2a und 2b aufweist. Die gegenüberliegende Stirnfläche des zylindrischen Gehäuses ist offen. Das Gehäuse 12 ragt im Bereich seiner Öffnung über die Koppelflächen 61a und 61b hinaus, so daß der Ultraschall-Prüfkopf beim Aufsetzen auf den zylindrischen Kopf 21 der Schlitzschraube 20 automatisch zentriert wird, so daß die Schraubenachse 26 mit einer der Öffnung durchsetzenden Symmetrieachse 13 des Ultraschall-Prüfkopfes zusammenfällt. Die Form des Gehäuses 12 entspricht vorzugsweise der Kopfform der zu prüfenden Schraube 20. Im Beispiel einer Schraube 20 mit zylindrischer Kopfform hat das Gehäuse 12 im Bereich seiner Öffnung vorzugsweise eine hohlzylindrische Gestalt. Eine Zentrierung kann aber auch durch eine andere Gehäuseform, beispielsweise ein gleichseitiges Vieleck, erreicht werden.

Im Beispiel der Figur ist eine Schlitzschraube 20 veranschaulicht, in deren Schlitz 22 ein Sicherungsstift 24 eingelegt ist, der die Stirnfläche des Schraubenkopfes 21 überragt. Das Gehäuse 12 des Ultraschall-Prüfkopfes ist im Bereich seiner Öffnung mit zwei Aussparungen 14 versehen, die mit der Trennschicht 10 fluchten. Durch diese Aussparungen 14 wird bewirkt, daß sich beim Aufsetzen des Ultraschall-Prüfkopfes auf die Schliltzschraube die Trennschicht 10 stets parallel zum Sicherungsstift 24 ausrichtet.

Die Ultraschallwandler 2a und 2b sind spiegelsymmetrisch zu einer parallel zur Trennschicht 10 verlaufenden und die Symmetrieachse 13 enthaltenden Symmetrieebene angeordnet. Die Einschallung in die Schlitzschraube 20 erfolgt dann definiert jeweils auf den beiden durch den Schlitz 22 und den Sicherungsstift 24 getrennten kreissegmentförmigen Oberflächen des Schraubenkopfes 21.

Die Trennschicht 10 ist vorzugsweise mindestens so breit wie der Schlitz 22 und ist zur Aufnahme des Sicherungsstiftes 24 gegenüber den Koppelflächen 61a und 61b der Koppelkörper 6a bzw. 6b zurückversetzt.

Die Normalen der Abstrahlflächen 3a und 3b der Ultraschallwandler 2a bzw. 2b sind im Beispiel der Figur gegenüber der Symmetrieachse 13 und der Oberflächennormalen der Koppelflächen 61a bzw. 61b geneigt. Die den Ultraschallwandlern 2a und 2b jeweils zugewandten Oberflächen der Koppelkörper 6a bzw. 6b sind gegenüber der Koppelflächen 61a bzw. 61b ebenfalls entsprechend geneigt. Dieser Neigungswinkel beträgt beispielsweise etwa 4 bis 8° und hängt sowohl von der Prüfaufgabe als auch von der geometrischen Gestalt der Schraube ab. Für eine Schraube gemäß dem Ausführungsbeispiel der Figur sind die Ultraschallwandler 2a und 2b gegen die Symmetrieachse 13 vorzugsweise so geneigt, daß sich der emittierte Schall in Richtung zur Symmetrieachse 13 hin ausbreitet.

Gemäß FIG 2 sind bei einer bevorzugten Ausführungsform Ultraschallwandler 2a und 2b vorgesehen, die eine kreissegmentförmige Querschnittsfläche haben. Dadurch wird eine besonders gute Anpassung an die ebenfalls kreissegmentförmigen Oberflächen des Kopfes einer Schlitzschraube gewährleistet.

In der besonders bevorzugten Ausführungsform nach FIG 3 sind vier Ultraschallwandler 2a bis d vorgesehen, die jeweils durch Trennschichten 10, 10bc und 10ad voneinander akustisch entkoppelt sind. Die Mittelebenen dieser Trennschichten 10, 10ad, 10bc schneiden sich in einer Gerade, die mit der Symmetrieachse 13 zusammenfällt. Die Ultraschallwandler 2a - d sind vorzugsweise entsprechend der Figur spiegelsymmetrisch zu diesen von den Trennschichten gebildeten Ebenen angeordnet. Ein Ultraschall-Prüfkopf mit diesen Gestaltungsmerkmalen ist besonders geeignet, Fehler, die sich in beliebiger Umfangsposition im Schraubenkopf und am Übergang zwischen Schraubenkopf und Schraubenschaft befinden, nachzuweisen.

Im Ausführungsbeispiel gemäß FIG 4 ist bei einem Ultraschall-Prüfkopf für eine Inbusschraube 30, beispielsweise eine Innensechskantschraube mit Kugelboden 32, eine Koppelfläche 62 vorgesehen, die ebenfalls die Gestalt einer Kugeloberfläche hat. Diese Koppelfläche 62 wird gebildet durch die in der Figur nicht sichtbaren Oberflächen der den einzelnen Ultraschallwandlern 2a und 2b zugeordneten Koppelkörper. Um ein formschlüssiges Aufsetzen des Ultraschall-Prüfkopfes auf den Kugelboden 32 ohne Hohlräume zu ermöglichen, sind auch die Stirnflächen der Trennschichten 10, 10bc und 10ad im Bereich der Öffnung an die Oberflächengestalt der Inbusschraube 30 angepaßt. Die Ultraschallwandler 2a und 2b sind vorzugsweise nach außen geneigt, so daß bei einem auf die Inbusschraube 30 aufgesetzten Prüfkopf eine Schallemission in Richtung zur Schaftaußenoberfläche der Schraube erfolgt. Damit lassen sich Fehler im Übergangsbereich Kopf/Schaft und im Bereich der Schaftaußenoberfläche besser erfassen. Die Neigung ist dabei vorzugsweise so, daß die von der Mitte der Ultrschallwandler 2a oder 2b jeweils ausgehende Oberflächennormale die Koppelfläche 62 in etwa senkrecht durchsetzt.

Gemäß FIG 5 ist die Seitenwand des Gehäuses 121 an die Gestalt des Schraubenkopfes angepaßt, so daß beim Aufsetzen auf den Kugelboden automatisch eine Zentrierung erfolgt. Vorzugsweise sind vier Ultraschallwandler 2a - d vorgesehen, die durch akustische Trennschichten 10, 10bc und 10ad voneinander getrennt sind.

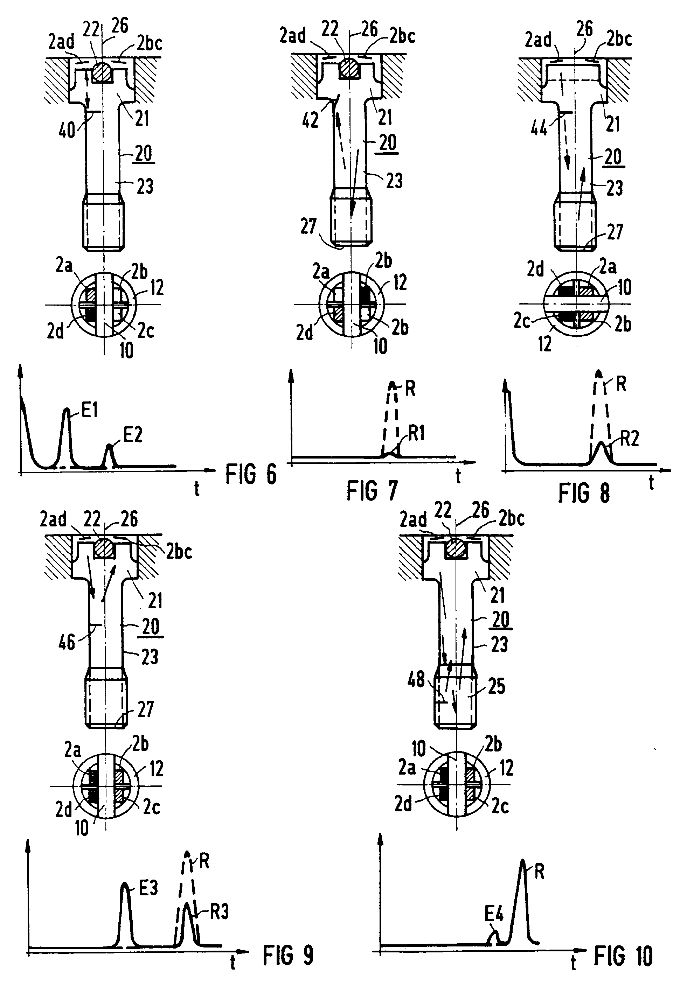

Gemäß FIG 6 enthält eine Schlitzschraube 20 im Übergangsbereich zwischen Schraubenkopf 21 und Schraubenschaft 23 eine Fehlstelle 40. Diese Fehlstelle 42 ist eine Rißfläche, die vom Rand der Schlitzschraube 20 ausgehend senkrecht zur Schraubenachse 26 orientiert ist und eine kreissegmentförmige Gestalt hat, deren Sehne parallel zum Schraubenschlitz 21 verläuft. Der auf die Schlitzschraube 20 aufgesetzte Prüfkopf ist schematisch durch die mit den Bezugszeichen 2ad und 2bc bezeichneten schräg gestellten Striche angedeutet. Der zugehörige Betriebsmodus ist anhand eines unterhalb der Schraube dargestellten schematischen Querschnittes veranschaulicht. Der schraffiert dargestellte Ultraschallwandler 2a dient in diesem Betriebsmodus als Empfänger und der schwarz ausgefüllte Ultraschallwandler 2d als Sender. Die beiden Ultraschallwandler 2c und 2b sind in diesem Modus nicht aktiviert. Die vom Ultraschallwandler 2d ausgehenden Ultraschallwellen und die vom Ultraschallwandler 2a empfangenen Ultraschallwellen sind in der Figur durch Pfeile veranschaulicht. Das zugehörige Echobild, in dem die vom Ultraschallwandler 2a empfangenen Signale gegen die Zeit aufgetragen sind, enthält zwei Echosignale E1 und E2, die durch einfache bzw. zweifache Reflexion an der Fehlstelle 40 hervorgerufen werden. Die im Echogramm der FIG 6 dargestellte gestrichelte Linie entspricht dem Echogramm einer fehlerfreien Schraube.

In FIG 7 ist eine ebenfalls flächige Fehlstelle 42 im Übergangsbereich zwischen Schraubenkopf 21 und Schraubenkopf 23 dargestellt, die geneigt zur Schraubenachse 26 orientiert ist. Mit einer Messung im Betriebsmodus nach FIG 6 kann ein solcher Fehler nur schwer nachgewiesen werden. Gemäß FIG 7 ist deshalb ein Betriebsmodus vorgesehen, in dem zwei diagonal einander gegenüberliegende Ultraschallwandler 2b und 2d als Sender bzw. Empfänger vorgesehen sind. Der vom Ultraschallwandler 2b in die Schraube eingekoppelte Ultraschall erreicht ungehindert den Schraubenboden 27, wird dort reflektiert und durch die Fehlstelle 42 abgeschattet, so daß er vom Ultraschallwandler 2d nicht empfangen werden kann. Im Echogramm gemäß FIG 7 ist zu erkennen, daß bei einer fehlerfreien Schraube vom Ultraschallwandler 2d ein gestrichelt eingezeichnetes Echosignal R empfangen wird. Bei Vorhandensein einer Fehlstelle 42 tritt anstelle des Echosignales R nur noch ein deutlich reduziertes Echosignal R1 auf.

Im Beispiel gemäß FIG 8 ist eine flächige, kreissegmentförmige Fehlstelle 44 im Bereich des Überganges zwischen Schraubenkopf 21 und Schraubenschaft 23 veranschaulicht, die quer zur Schraubenachse 26 orientiert ist und deren Sehne senkrecht zum Schraubenschlitz 22 verläuft. Um einen solchen Fehlertyp nachzuweisen, ist es zweckmäßig, jeweils zwei einander bezüglich der Trennschicht 10 gegenüberliegende Ultraschallwandler 2c und 2d als Sender und die restlichen zwei Ultraschallwandler 2a und 2b als Empfänger zu verwenden. Dem Echogramm gemäß FIG 8 ist zu entnehmen, daß auch in diesem Fall das bei einer fehlerfreien Schraube auftretende Echosignal R durch eine Abschattung des von den Ultraschallsendern 2c und 2d emittierten Ultraschalls unterdrückt wird, so daß das vom Schraubenboden 27 reflektierte Echosignal R2 deutlich reduziert ist.

FIG 9 zeigt eine Schlitzschraube mit einer senkrecht zur Schraubenachse 26 orientierten und in der Mitte des Schraubenschaftes 23 befindlichen kreissegmentförmigen Rißfläche 46, deren Sehne parallel zum Schraubenschlitz 22 verläuft. Für den Nachweis einer solchen Fehlstelle 46 ist es günstig, jeweils zwei Ultraschallwandler 2a und 2d als Sender und zwei Ultraschallwandler 2b und 2c als Empfänger zu verwenden. Die als Sender aktiven Ultraschallwandler 2a und 2d und die als Empfänger verwendeten Ultraschallwandler 2b und 2c sind durch die parallel zum Schraubenschlitz 22 verlaufende Trennschicht 10 voneinander getrennt. Das in FIG 9 dargestellte entsprechende Echogramm zeigt einen Echoimpulse E3, der an der Fehlstelle 46 entsteht. Außerdem tritt ein vom Schraubenboden 27 reflektiertes Echosignal R3 auf, das gegenüber dem Echosignal R, das bei einer fehlerfreien Schraube gemessen wird, deutlich reduziert ist.

In FIG 10 ist eine Fehlstelle 48 des gleichen Typs wie in FIG 9 eingezeichnet, die sich im Gewindeteil 25 befindet. Der bevorzugte Betriebsmodus des Ultraschall-Prüfkopfes entspricht dem Betriebsmodus im Beispiel gemäß FIG 9. Vor dem vom Schraubenboden 27 reflektierten Echosignal R tritt noch ein Echosignal E4 auf, das bei einer fehlerfreien Schraube nicht zu beobachten ist.

Die in Figuren 6 bis 10 dargestellten Betriebsarten des erfindungsgemäßen Ultraschall-Prüfkopfes stellen keine abschließende Auswahl der Betriebsmöglichkeiten dar. Vielmehr soll anhand dieser Beispiele nur veranschaulicht werden, daß durch die Vielzahl der möglichen Betriebsarten eine sichere Bestimmung und Charakterisierung der meisten in einer Schraubevorkommenden Fehlerarten ermöglicht wird.

## Patentansprüche

1. Einrichtung zur Ultraschallprüfung von Schrauben mit einem Ultraschall-Prüfkopf, der
a) eine Ultraschallwandleranordnung mit mehreren Ultraschallwandlern (2a, 2b) enthält,
b) die jeweils akustisch an einen Koppelkörper (6a bzw. 6b) aus einem festen Material gekoppelt und
c) sowohl als Sender als auch als Empfänger betreibbar sind,
wobei
d) die Koppelkörper (6a, 6b) mit einer freien, von den Ultraschallwandlern (2a, 2b) jeweils abgewandten und an die Oberflächengestalt des Schraubenkopfes (21) der zu prüfenden Schraube (20) angepaßten Koppelfläche (61a, 61b) versehen und
e) Mittel zum Zentrieren des Ultraschall-Prüfkopfes auf dem Schraubenkopf (21) vorgesehen sind,
dadurch gekennzeichnet, daß die Ultraschallwandler derart betreibbar sind, daß sowohl eine Betriebsart möglich ist, bei der wenigstens ein Ultraschallwandler als Sender und als Empfänger betrieben wird, als auch eine Betriebsart möglich ist, bei der wenigstens ein Ultraschallwandler als Sender und wenigstens ein anderer Ultraschallwandler als Empfänger betrieben wird.

2. Ultraschall-Prüfkopf nach Anspruch 1, **dadurch gekennzeichnet**, daß die Ultraschallwandler (2a, 2b) voneinander jeweils durch eine akustische Trennschicht (10) zum Unterdrücken eines direkten Übersprechens getrennt sind.

3. Ultraschall-Prüfkopf nach einem der vorhergehenden Ansprüche, **dadurch gekennzeichnet,** daß die Ultraschallwandler (2a, 2b) in einem Gehäuse (12) angeordnet sind, das mit einer Öffnung zum Schallaustritt und zum Schalleintritt versehen ist und eine diese Öffnung durchsetzende Symmetrieachse (13) hat, wobei das Gehäuse (12) im Bereich seiner Öffnung Mittel zum Zentrieren des Ultraschall-Prüfkopfes auf dem Schraubenkopf (21) aufweist.

4. Ultraschall-Prüfkopf nach Anspruch 3, **dadurch gekennzeichnet**, daß zur Ultraschallprüfung von Schlitzschrauben (20) ein Ultraschall-Prüfkopf mit einem Gehäuse (12) vorgesehen ist, das auf den Kopf der Schlitzschraube (20) aufgesteckt werden kann und im Bereich seiner Öffnung Führungsmittel (14) enthält, die ein Aufstecken auf den Kopf (21) nur in vorgegebenen Stellungen zum Schlitz (22) ermöglichen.

5. Ultraschall-Prüfkopf nach Anspruch 4, **dadurch gekennzeichnet**, daß bei einem Ultraschall-Prüfkopf für Schrauben mit einem in den Schlitz (22) eingelegten Sicherungsstift (24) das Gehäuse (12) im Bereich der Öffnung mit einander gegenüberliegenden Aussparungen (14) versehen ist.

6. Ultraschall-Prüfkopf nach Anspruch 4 oder 5, **dadurch gekennzeichnet** , daß eine Ultraschallwandleranordnung vorgesehen ist, die spiegelsymmetrisch zu einer die Symmetrieachse (13) enthaltenden Symmetrieebene ist, wobei diese Symmetrieebene durch die Führungsmittel (14) derart festgelegt ist, daß sie nach Aufstecken auf den Kopf (21) wenigstens annähernd mit der Mittelebene des Schlitzes (22) zusammenfällt.

7. Ultraschall-Prüfkopf nach Anspruch 6, **dadurch gekennzeichnet,** daß sich in der durch zwei gegenüberliegende Aussparungen festgelegten Symmetrieebene jeweils eine akustische Trennschicht (10) erstreckt, deren Breite im wesentlichen der Breite des Schlitzes (22) entspricht.

8. Ultraschall-Prüfkopf nach einem der vorhergehenden Ansprüche, **dadurch gekennzeichnet**, daß eine Ultraschallwandleranordnung mit vier Ultraschallwandlern (2a bis d) vorgesehen ist.

9. Ultraschall-Prüfkopf nach einem der vorhergehenden Ansprüche, **dadurch gekennzeichnet**, daß die Abstrahlfläche (3a, 3b) der Ultraschallwandler (2a bzw. 2b) gegen die Symmetrieachse (13) geneigt ist.

10. Ultraschall-Prüfkopf nach einem der vorhergehenden Ansprüche, **dadurch gekennzeichnet**, daß die Ultraschallwandler (2a, 2b) in einem Dämpfungskörper (8) eingebettet sind.

11. Ultraschall-Prüfkopf nach Anspruch 10, **dadurch gekennzeichnet**, daß die Ultraschallwandler (2a, 2b) an ihrer Abstrahlfläche (3a bzw. 3b) mit einer Anpassungsschicht (4a bzw. 4b) versehen sind.

12. Ultraschall-Prüfkopf nach Anspruch 11, **dadurch gekennzeichnet**, daß einen λ/4-dicke Anpassungsschicht (4a, 4b) vorgesehen ist.

13. Verfahren zum Betrieb eines Ultraschall-Prüfkopfes nach einem der vorhergehenden Patentansprüche, gekennzeichnet durch folgende Verfahrensschritte:
a) der Ultraschall-Prüfkopf wird mit seinen Koppelflächen (61a, 61b) auf die Oberfläche des Schraubenkopfes aufgesetzt und zentriert,
b) zur Lokalisierung und Charakterisierung eines Materialfehlers in der Schraube sind mehrere Meßschritte vorgesehen, in denen jeweils unterschiedliche Ultraschallwandler im Sende- und/oder Empfangsmodus betrieben werden.

14. Verfahren nach Anspruch 13, **dadurch gekennzeichnet**, daß Meßschritte vorgesehen sind, bei denen nur ein Ultraschallwandler als Sender und Empfänger betrieben wird.

15. Verfahren nach Anspruch 13, **dadurch gekennzeichnet**, daß Meßschritte vorgesehen sind, bei denen ein Ultraschallwandler als Sender und ein weiterer Ultraschallwandler als Empfänger betrieben werden.

16. Verfahren nach Anspruch 13, **dadurch gekennzeichnet**, daß bei einem Ultraschallprüfkopf mit wenigstens vier Ultraschallwandlern Meßschritte vorgesehen sind, bei denen jeweils zwei Ultraschallwandler als Sender und die anderen Ultraschallwandler als Empfänger betrieben werden.

## Claims

1. Device for the ultrasonic testing of screws, having an ultrasonic testing head, which
a) contains an ultrasonic transducer arrangement having a plurality of ultrasonic transducers (2a, 2b),
b) which are respectively acoustically coupled to a coupling body (6a and 6b) of a solid material, and
c) can be operated both as a transmitter and as a receiver,
with
d) the coupling bodies (6a, 6b) being provided with a free coupling surface (61a, 61b), which faces away from the respective ultrasonic transducer (2a, 2b) and is adapted to the shape of the surface of the screw head (21) of the screw (20) which is to be tested, and
e) means being provided for centring the ultrasonic testing head on the screw head (21),
characterised in that the ultrasonic transducers can be operated in such a way that an operating mode in which at least one ultrasonic transducer is operated as a transmitter and as a receiver, and also an operating mode in which at least one ultrasonic transducer is operated as a transmitter and at least one other ultrasonic transducer is operated as a receiver are both possible.

2. Ultrasonic testing head according to claim 1, characterised in that the ultrasonic transducers (2a, 2b) in each case are separated from each other by an acoustic separating layer (10) in order to suppress direct crosstalk.

3. Ultrasonic testing head according to one of the preceding claims, characterised in that the ultrasonic transducers (2a, 2b) are arranged in a housing (12), which is provided with an opening for the exit of sound and for the entry of sound, and has an axis of symmetry (13) which passes through said opening, with the housing (12) having in the region of its opening means for centring the ultrasonic testing head on the screw head (21).

4. Ultrasonic testing head according to claim 3, characterised in that for the ultrasonic testing of slotted screws (20), an ultrasonic testing head having a housing (12) is provided, which housing can be mounted on the head of the slotted screw (20) and contains in the region of its opening guiding means (14), which permit said housing to be mounted on the head (21) only in pre-determined positions in relation to the slot (22).

5. Ultrasonic testing head according to claim 4, characterised in that in the case of an ultrasonic testing head for screws which have a locking pin (24) inserted in the slot (22), in the region of the opening the housing (12) is provided with recesses (14) which are situated opposite each other.

6. Ultrasonic testing head according to claim 4 or 5, characterised in that an ultrasonic transducer arrangement is provided, which ultrasonic transducer arrangement is mirror-symmetrical to a plane of symmetry which contains the axis of symmetry (13), with said plane of symmetry being determined by the guiding means (14) in such a way that it coincides at least approximately with the central plane of the slot (22) after the ultrasonic testing head has been mounted on the head (21).

7. Ultrasonic testing head according to claim 6, characterised in that extending in the plane of symmetry which is determined by two opposing recesses, there is a respective acoustic separating layer (10), the width of which substantially corresponds to the width of the slot (22).

8. Ultrasonic testing head according to one of the preceding claims, characterised in that an ultrasonic transducer arrangement having four ultrasonic transducers (2a to d) is provided.

9. Ultrasonic testing head according to one of the preceding claims, characterised in that the radiating surface (3a, 3b) of the ultrasonic transducers (2a and 2b respectively) is inclined in respect of the axis of symmetry (13).

10. Ultrasonic testing head according to one of the preceding claims, characterised in that the ultrasonic transducers (2a, 2b) are embedded in a damping body (8).

11. Ultrasonic testing head according to claim 10, characterised in that on their radiating surface (3a and 3b), the ultrasonic transducers (2a, 2b) are provided with an adaptation layer (4a and 4b respectively).

12. Ultrasonic testing head according to claim 11, characterised in that a λ/4-thick adaptation layer (4a, 4b) is provided.

13. Method for operating an ultrasonic testing head according to one of the preceding claims, characterised by the following method steps:
a) the coupling surfaces (61a, 61b) of the ultrasonic testing head are placed on the surface of the screw head and centred thereon,
b) in order to locate and characterise a defect of material in the screw, several measuring steps are provided, in which measuring steps different ultrasonic transducers are respectively operated in the transmitting mode and/or receiving mode.

14. Method according to claim 13, characterised in that measuring steps are provided, in which measuring steps only one ultrasonic transducer is operated as a transmitter and receiver.

15. Method according to claim 13, characterised in that measuring steps are provided, in which measuring steps one ultrasonic transducer is operated as a transmitter and a further ultrasonic transducer is operated as a receiver.

16. Method according to claim 13, characterised in that in the case of an ultrasonic testing head having at least four ultrasonic transducers, measuring steps are provided, in which measuring steps in each case two ultrasonic transducers are operated as transmitters and the other ultrasonic transducers are operated as receivers.

## Revendications

1. Dispositif pour le contrôle aux ultrasons de vis, à l'aide d'une tête de contrôle à ultrasons, qui
a) comporte un dispositif transducteur à ultrasons comportant plusieurs transducteurs à ultrasons (2a,2b),
b) respectivement accouplés acoustiquement à un corps de couplage (6a ou 6b) formé d'un matériau solide, et
c) peuvent fonctionner aussi bien en émetteur qu'en récepteur,
d) les corps de couplage (6a,6b) étant pourvus d'une surface libre de couplage (61a, 61b), tournée respectivement à l'opposé des transducteurs à ultrasons (2a,2b) et adaptée à la configuration superficielle de la tête (21) de la vis à contrôler (20), et
e) des moyens étant prévus pour centrer la tête de contrôle à ultrasons sur la tête de vis (21),
caractérisé par le fait que les transducteurs à ultrasons sont susceptibles d'être exploités aussi bien selon un type de fonctionnement, dans lequel au moins un transducteur à ultrasons fonctionne comme émetteur et comme récepteur, et également selon un type de fonctionnement, dans lequel au moins un transducteur à ultrasons fonctionne comme émetteur et au moins un autre transducteur à ultrasons comme récepteur.

2. Tête de contrôle à ultrasons suivant la revendication 1, caractérisée par le fait que les transducteurs à ultrasons (2a,2b) sont respectivement séparés l'un de l'autre par une couche de séparation acoustique (10) servant à supprimer une diaphonie directe.

3. Tête de contrôle à ultrasons suivant l'une des revendications précédentes, caractérisée en ce que les transducteurs à ultrasons (2a,2b) sont disposés dans un boîtier (12), qui comporte une ouverture pour la sortie et l'entrée du son et qui présente un axe de symétrie (13) qui passe à l'intérieur de cette ouverture, le boîtier (12) comportant, au niveau de son ouverture, des moyens pour centrer la tête de contrôle à ultrasons sur la tête de vis (21).

4. Tête de contrôle à ultrasons suivant la revendication 3, caractérisée en ce que pour le contrôle de la vis à fente (20) il est prévu une tête de contrôle à ultrasons comportant un boîtier (12), qui peut être emmanché sur la tête de la vis à fente (20) et comporte, dans la zone de son ouverture, des moyens de guidage (14), qui permettent un engagement sur la tête (21), uniquement dans des positions prédéterminées par rapport à la fente (22).

5. Tête de contrôle à ultrasons suivant la revendication 4, caractérisée en ce que, dans le cas d'une tête de contrôle à ultrasons pour des vis comportant une cheville de sécurité (24) insérée dans la fente (22), le boîtier (12) comporte, au niveau de l'ouverture, des évidements (14), qui se font face.

6. Tête de contrôle à ultrasons suivant la revendication 4 ou 5, caractérisée par le fait qu'il est prévu un dispositif transducteur à ultrasons qui est symétrique par rapport à un plan de symétrie contenant l'axe de symétrie (13, ce plan de symétrie étant fixé par les moyens de guidage (14) de telle sorte qu'après emmanchement sur la tête (28), il coïncide au moins approximativement avec le plan médian de la fente (22).

7. Tête de contrôle à ultrasons suivant la revendication 6, caractérisée en ce que dans le plan de symétrie fixé par deux évidements opposés s'étend respectivement une couche de séparation acoustique (10), dont la largeur correspond essentiellement à la largeur de la fente (22).

8. Tête de contrôle à ultrasons suivant l'une des revendications précédentes, caractérisée en ce qu'il est prévu un dispositif transducteur à ultrasons comportant quatre transducteurs à ultrasons (2a à e).

9. Tête de contrôle à ultrasons suivant l'une des revendications précédentes, caractérisée par le fait que la surface rayonnante (3a,3b) des transducteurs à ultrasons (2a ou 2b) est inclinée par rapport à l'axe de symétrie (13).

10. Tête de contrôle à ultrasons suivant l'une des revendications précédentes, caractérisée par le fait que les transducteurs à ultrasons (2a,2b) sont enchâssés dans un corps d'amortissement (8).

11. Tête de contrôle à ultrasons suivant la revendication 10, caractérisée par le fait que les transducteurs à ultrasons (2a,2b) comportent, au niveau de leurs surfaces rayonnantes (3a ou 3b) une couche d'adaptation (4a ou 4b).

12. Tête de contrôle à ultrasons suivant la revendication 11, caractérisée par le fait qu'il est prévu une couche d'adaptation (4a,4b) possédant une épaisseur λ/4.

13. Procédé pour l'exploitation d'une tête de contrôle à ultrasons suivant l'une des revendications précédentes, caractérisé par les étapes opératoires suivantes :
a) on place et on centre la tête de contrôle à ultrasons, par ses surfaces de couplage (61a,61b), sur la surface de la tête de vis, et
b) pour le répérage et la caractérisation d'un défaut du matériau dans la vis, on prévoit plusieurs étapes de mesure, lors desquelles on fait fonctionner des transducteurs à ultrasons respectivement différents dans le mode d'émission et/ou de réception.

14. Procédé suivant la revendication 13, caractérisé par le fait que sont prévues des étapes de mesure, lors desquelles on ne fait fonctionner qu'un transducteur à ultrasons en tant qu'émetteur et récepteur.

15. Procédé suivant la revendication 13, caractérisé en ce que sont prévues des étapes de mesure, lors desquelles on fait fonctionner un transducteur à ultrasons en tant qu'émetteur et un autre transducteur à ultrasons en tant que récepteur.

16. Procédé suivant la revendication 13, caractérisé en ce que dans le cas d'une tête de contrôle à ultrasons comportant au moins quatre transducteurs à ultrasons, sont prévues des étapes de mesure, lors desquelles on fait fonctionner respectivement deux transducteurs à ultrasons en tant qu'émetteurs et les autres transducteurs à ultrasons en tant que récepteurs.
